# EUROPÄISCHE PATENTSCHRIFT

(11) **EP 1 678 547 B1**
(45) Veröffentlichungstag und Bekanntmachung des Hinweises auf die Patenterteilung: **13.10.2010**
(21) Anmeldenummer: 04791065.8
(22) Anmeldetag: 29.10.2004
(51) Int. Cl.: G02B 21/00, G01N 21/17, G01N 21/63

(54) **VORRICHTUNG UND VERFAHREN ZUR MESSUNG OPTISCHER EIGENSCHAFTEN EINES OBJEKTS**
DEVICE AND METHOD FOR MEASURING THE OPTICAL PROPERTIES OF AN OBJECT
DISPOSITIF ET PROCEDE DE MESURE DES PROPRIETES OPTIQUES D'UN OBJET

(30) Priorität: 31.10.2003 DE 10350918
(43) Veröffentlichungstag der Anmeldung: 12.07.2006
(73) Patentinhaber: PerkinElmer Cellular Technologies Germany GmbH, 40225 Düsseldorf (DE)
(72) Erfinder: MÜLLER, Jürgen, 22523 Hamburg (DE); GARBOW, Norbert, 22589 Hamburg (DE)
(74) Vertreter: von Kreisler Selting Werner
(86) Internationale Anmeldenummer: PCT/EP2004/012309
(87) Internationale Veröffentlichungsnummer: WO 2005/043213

(56) Entgegenhaltungen:
- EP-A- 1 283 416
- WO-A2-03/019242
- US-A1- 2002 058 300
- CAMORANI P ET AL: "Photoinduced morphological changes and optical writing in a liquid crystalline polymer on the micron and sub-micron scale" MOLECULAR CRYSTALS AND LIQUID CRYSTALS GORDON & BREACH SWITZERLAND, Bd. 375, 2002, Seiten 175-184, XP008042060 ISSN: 1058-725X
- KÖNIG K: "Multiphoton microscopy in life sciences" JOURNAL OF MICROSCOPY, OXFORD, GB, Bd. 200 ( Pt 2), November 2000 (2000-11), Seiten 83-104, XP002257733 ISSN: 0022-2720
- TAMAI N ET AL: "FEMTOSECOND TRANSIENT ABSORPTION MICROSPECTROPHOTOMETER COMBINED WITH OPTICAL TRAPPING TECHNIQUE" REVIEW OF SCIENTIFIC INSTRUMENTS, AMERICAN INSTITUTE OF PHYSICS. NEW YORK, US, Bd. 64, Nr. 9, 1. September 1993 (1993-09-01), Seiten 2496-2503, XP000395619 ISSN: 0034-6748
- BUEHLER C ET AL: "Time-resolved polarization imaging by pump-probe (stimulated emission) fluorescence microscopy" BIOPHYSICAL JOURNAL BIOPHYS. SOC USA, Bd. 79, Nr. 1, Juli 2000 (2000-07), Seiten 536-549, XP002315087 ISSN: 0006-3495

## Beschreibung

Die Erfindung betrifft eine Vorrichtung und ein Verfahren zur Messung optischer Eigenschaften eines Objekts, vorzugsweise seiner optischen Transmissions- oder Absorptionseigenschaften. Insbesondere handelt es sich bei dem Objekt um eine chemische und/oder biologische Probe, die vorzugsweise Partikel wie Zellen aufweist.

Zur Untersuchung von Transmissionseigenschaften von Objekten ist es bekannt, die Probe sowohl mit einer Anregungs-Lichtquelle, die auch als Pump-Lichtquelle bezeichnet wird, als auch mit einer Beleuchtungs-Lichtquelle, die auch als ProbeLichtquelle bezeichnet wird, zu beleuchten. Es kann sich dabei um sichtbares oder nicht sichtbares Licht handeln. Hierbei werden die Moleküle des zu untersuchenden Objekts durch die Anregungs-Lichtquelle angeregt, so dass die Besetzungsdichte des Grundzustands des Moleküls reduziert wird. Mit der Beleuchtungs-Lichtquelle kann der Zustand der Moleküle in verschiedener Weise - analysiert werden. Beispielsweise ist die Möglichkeit bekannt, die Wellenlänge der Beleuchtungs-Lichtquelle ähnlich derer der Anregungs-Lichtquelle zu wählen. Dies hat zur Folge, dass die von der Beleuchtungs-Lichtquelle kommende Strahlung von den bereits angeregten Molekülen nicht mehr aufgenommen wird und somit unter Einfluss der Anregungsstrahlung die Transmission der Beleuchtungsstrahlung durch das Objekt erhöht wird. Andererseits kann die Wellenlänge der Beleuchtungsstrahlung ähnlich der Emissionswellenlänge der angeregten Moleküle gewählt werden. In diesem Fall kann die Beleuchtungsstrahlung in den durch die Anregungsstrahlung angeregten Molekülen die stimulierte Emission von Photonen hervorrufen. Dies bewirkt eine scheinbar erhöhte Transmission der Beleuchtungsstrahlung, da zusätzliche im Objekt emittierte Photonen mit der gleichen Wellenlänge auftreten. Bekannt ist weiterhin die Möglichkeit, die Wellenlänge der Beleuchtungsstrahlung so zu wählen, dass sie bevorzugt von solchen Molekülen absorbiert werden kann, die bereits im durch die Anregungsstrahlung angeregten Zustand sind. In diesem Fall bewirkt die Anregung der Moleküle durch die Anregungsstrahlung eine Verringerung der Transmission der Beleuchtungsstrahlung. Bei den bekannten Verfahren wird sowohl die Beleuchtungs-Lichtquelle, als auch die Anregungs-Lichtquelle an demselben Ort des Objekts fokussiert. Um eine gemeinsame Optik nutzen zu können, sind hierbei beide Lichtquellen auf derselben Seite des Objekts angeordnet. Eine Detektionseinrichtung ist zur Messung der Transmission auf der gegenüberliegenden Seite des Objekts angeordnet.

Um eine dreidimensional ortsauflösende Messung innerhalb eines Objektes durchführen zu können, ist ein konfokaler Aufbau vorteilhaft. Hierzu sind verschiedene optische Anordnungen bekannt:

In der konfokalen Mikroskopie, die typischerweise mit nur einer Lichtquelle arbeitet, ist es bekannt, vor dem Detektor eine Optik und ein Pinhole anzuordnen und so zu justieren, dass der Detektor bevorzugt Licht aus dem Messvolumen erfasst, das auch im Fokus der Lichtquelle liegt. Bevorzugt werden hier Beleuchtungs- und Detektionsstrahlung durch dieselbe Optik geführt.

Kommen getrennte Anregungs- und Beleuchtungs-Lichtquellen zum Einsatz, so ist es zum anderen bekannt, diese durch eine gemeinsame Optik auf ein gemeinsames Messvolumen zu fokussieren. Durch die bevorzugte Ausleuchtung des Messvolumens durch beide Lichtquellen wird bereits beleuchtungsseitig die dreidimensionale Ortsauflösung der Messung gewährleistet; der Detektor kann in diesem Fall als nicht ortsauflösender Detektor ausgeführt sein. Diese Anordnung hat jedoch den grundsätzlichen Nachteil, dass eine parallelisierte Messung, d.h. die gleichzeitige Messung mehrerer Messvolumina in dem Objekt, nicht möglich ist, da der Detektor stets das Licht aller Messvolumina gemeinsam erfasst und eine räumliche Zuordnung nicht möglich ist.

Das Dokument: CAMORANI P ET AL: "Photoinduced morphological changes and optical writing in a liquid crystalline polymer on the micron and sub-micron scale" MOLECULAR CRYSTALS AND LIQUID CRYSTALS Bd. 375, 2002 , Seiten 175-184 offenbart die Messung optischer Eigenschaften eines Objektes, insbesondere die Bestimmung der photoinduzierten Doppelbrechung in einem Flüssigkristall, mit einer räumlich ausgedehnten Beleuchtung und einer in ein Messvolumen fokussierten Anregungsstrahlung, die die Orientation des Flüssigkristalls lokal verändert. Der beleuchtete Objektausschnitt wird mit einer CCD Kamera abgebildet.

Aus EP 1 283 416 ist ein Mikroskop zur Durchführung von Fluoreszenzmessungen bekannt. Eine Anregungs-Lichtquelle wird hierbei derart in einer Probe fokussiert, dass mehrere Messvolumina erzeugt sind. Die durch die Anregungsstrahlung hervorgerufene Fluoreszenz wird konfokal durch eine als Detektor dienende CCD-Kamera gemessen.

Aufgabe der Erfindung ist es, eine Vorrichtung und ein Verfahren zur Messung optischer Eigenschaften eines Objekts, vorzugsweise seiner Transmissionseigenschaften, zu schaffen, mit der bzw. mit dem eine parallelisierte Messung mehrerer Messvolumina möglich ist.

Die Lösung der Aufgabe erfolgt erfindungsgemäß durch eine Vorrichtung gemäß Anspruch 1 sowie ein Verfahren gemäß Anspruch 14.

Die erfindungsgemäße Vorrichtung zur Messung optischer Eigenschaften eines Objekts, insbesondere einer chemischen und/oder einer biologischen Probe, die Partikel wie Zellen oder dergleichen aufweist, ist insbesondere zur Messung optischer Transmissions- und Absorptionseigenschaften des Objekts geeignet. Die Vorrichtung weist zur Beleuchtung des Objekts eine Beleuchtungs-Lichtquelle auf. Bei der Beleuchtungs-Lichtquelle handelt es sich insbesondere um eine breitbandige Lichtquelle, beispielsweise eine Quecksilber- oder Xenon-Lampe, der ein Filter zur Selektion eines Spektralbereichs nachgeordnet ist. Alternativ kann eine Laserquelle mit geeigneter Strahlaufweitungsoptik verwendet werden. Ferner weist die Vorrichtung eine Anregungs-Lichtquelle auf, bei der es sich vorzugsweise um eine Laser-Lichtquelle handelt. Die Anregungs-Lichtquelle ist durch die verwendete Strahlung geeignet, die optischen Eigenschaften des Objekts zu verändern. Hierbei wird durch die Anregungs-Lichtquelle insbesondere die Besetzungsdichte des Grundzustands der zu untersuchenden Moleküle des Objekts verringert. Des weiteren weist die Vorrichtung eine Detektionseinheit wie beispielsweise ein CCD-Array auf, durch die vom Objekt ausgehende Strahlung erfasst werden kann. Hierbei kann es sich insbesondere um die durch das Objekt hindurchtretende Strahlung der Beleuchtungs-Lichtquelle handeln, so dass eine Transmissionsmessung erfolgt. Erfindungsgemäß wird durch die Beleuchtungs-Lichtquelle ein räumlich ausgedehnter Objektausschnitt beleuchtet. Die Beleuchtungs-Lichtquelle ist somit nicht auf das oder die einzelnen Messvolumina innerhalb des Objekts fokussiert. Die Anregungs-Lichtquelle ist hingegen auf mehrere Messvolumina fokussiert. Durch die Anregungs-Lichtquelle sind somit vorzugsweise mehrere kleine Messvolumina gleichzeitig beleuchtet. Hierbei erfolgt die Beleuchtung der einzelnen Messvolumina in der auf der Detektoreinrichtung abgebildeten Objektebene. Der auf die Detektoreinrichtung abgebildete Ausschnitt dieser Objektebene deckt sich zumindest teilweise mit dem Objektausschnitt, der durch die Beleuchtungs-Lichtquelle beleuchtet wird. Durch das Vorsehen eines ortsauflösenden Detektors wie eines CCD-Arrays oder auch einzelner Detektoren kann vorzugsweise die Transmission durch die einzelnen Messvolumina untersucht werden. Mit der erfindungsgemäßen Vorrichtung ist es somit möglich, parallel mehrere einzelne Messvolumina der Probe zu untersuchen.

Erfindungsgemäß werden die Messvolumina somit durch die Anregungs-Lichtquelle erzeugt. Des Weiteren wird erfindungsgemäß die durch die Messvolumina hindurchtretende Beleuchtungs-Strahlung durch die Detektoreinrichtung detektiert, die eine spektrale Empfindlichkeit aufweist. Durch die Detektoreinrichtung wird somit transmittierte Beleuchtungs-Strahlung detektiert.

Um mehrere Messvolumina in der Objektebene, die auf der Detektoreinrichtung abgebildet wird, zu erzeugen, kann ein Array von Pinholes (Lochblenden), das z.B. auf einer rotierenden sog. Nipkowscheibe angeordnet ist, in das Objekt abgebildet werden. Zur Erhöhung der Anregungseffizienz kann im Anregungsstrahlengang vor dem Pinhole-Array ein Mikrolinsen-Array vorgesehen werden, das die Anregungsstrahlung auf die einzelnen Pinholes fokussiert.

Erfindungsgemäß wird eine konfokale Detektion durchzuführen. Hierzu wird erfindungsgemäß in dem Strahlengang vor der Detektoreinrichtung, gegebenenfalls in Kombination mit einer oder mehrerer Linsen, bei mehreren Messvolumina ein Pinhole-Array angeordnet. Hierbei korrespondiert das detektionsseitig vorgesehene Pinhole-Array mit dem der Anregungs-Lichtquelle zugeordneten Pinhole-Array bzw. der dort vorgesehenen Nipkow-Scheibe. Insbesondere ist es bevorzugt, den Detektionsstrahlengang durch dasselbe Pinhole-Array zu führen wie den Anregungsstrahlengang, um ohne Justageaufwand eine präzise räumliche Übereinstimmung der anregungs- und detektionsseitig wirkenden Pinholes zu erzielen. Alternativ kann erfindungsgemäß ein detektionsseitiges Pinhole-Array verwendet werden, welches mit einem anregungsseitig angeordneten Array von Mikrolinsen korrespondiert. Das Mikrolinsenarray dient hierbei der Erzeugung der Messvolumina.

Das Messvolumen bzw. die einzelnen Messvolumina sind annähernd punktförmig. Insbesondere ist das Volumen eines einzelnen Messvolumens kleiner als (100µm)³, insbesondere kleiner als (10µm)³. Statt dem Vorsehen einer Nipkow-Scheibe oder dergleichen kann auch ein einzelnes Messvolumen relativ zu dem Objekt bewegt werden, so dass ein Scannen des Objekts erfolgt. Ferner ist eine entsprechende Kombination möglich.

Desweiteren ist es möglich, ein oder mehrere linienförmige Messvolumen zu erzeugen, beispielsweise durch Einsatz von Zylinderlinsen und/oder Strichblenden, die beispielsweise auf einer rotierenden Scheibe angeordnet sein können. Zudem ist es möglich, das linienförmige Messvolumen senkrecht zu der Linie zu bewegen, so dass eine Scanbewegung der Linie in der Objektebene erfolgt.

Zur Durchführung unterschiedlicher Untersuchungen ist es vorzugsweise möglich, die Eigenschaften der Beleuchtungs-Lichtquelle und/oder der Anregungs-Lichtquelle zu variieren. Hierbei kann ein Variieren der Wellenlänge und/oder der Intensität erfolgen. Insbesondere ist die Beleuchtungs-Lichtquelle ünd/öder die Anregungs-Lichtquelle spektral durchstimmbar und/oder selektierbar.

Die Detektoreinrichtung, bei der es sich vorzugsweise um ein CCD-Array mit hoher örtlicher Auflösung und ggf. zusätzlichen Elementen zur Selektion des Detektionswellenlängenbereichs handelt, ist vorzugsweise schnell und/oder pixelselektiv auslesbar. Insbesondere sind die einzelnen Pixel innerhalb von weniger als 10 µs, insbesondere weniger als 1 µs, auslesbar. Vorzugsweise wird als CCD-Array eine CCD-Kamera "SensiCam QE" des Herstellers PCO GmbH eingesetzt. Ferner ist vorzugsweise die Empfindlichkeit des Detektors veränder- bzw. einstellbar. Des Weiteren kann eine geeignete Regelung vorgesehen sein, um die Detektorsignale einzelner Pixel oder von Pixelgruppen in Abhängigkeit von der Phasenbeziehung zwischen den Modulationen der Intensität der Beleuchtungs-Lichtquellen zu erfassen.

Vorzugsweise ist die Beleuchtungs-Lichtquelle schaltbar oder in ihrer Strahlungsintensität einstellbar. Hierdurch ist es insbesondere in Verbindung mit der vorstehend beschriebenen Detektoreinrichtung möglich, bei ausgeschalteter Beleuchtungs-Lichtquelle die Fluoreszenz des Objekts bzw. der Probe und bei eingeschalteter Beleuchtungs-Lichtquelle die Transmission mit Hilfe eines einzigen Detektors zu messen. Ferner kann es zweckmäßig sein, innerhalb der Detektoreinrichtung einen weiteren Detektor zur Erfassung der vom Objekt abgegebenen Fluoreszenz-Strahlung vorzusehen.

Besonders bevorzugt ist das Herstellen der erfindungsgemäßen Vorrichtung auf Grundlage eines handelsüblichen Laser-Scanning-Mikroskops. Hierbei handelt es sich beispielsweise um ein LSM-Modul vom Typ Olympus Fluo View, oder ein konfokales Nipkow-Scanningmodul vom Typ Yokogawa CSU-10, die jeweils an einem üblichen Lichtmikroskop, z.B. aus der Baureihe Olympus IX-70, angebracht sind.

Bei der erfindungsgemäßen Vorrichtung ist die Beleuchtungs-Lichtquelle vorzugsweise gegenüber der Anregungs-Lichtquelle, d.h. auf der gegenüberliegenden Seite des Objekts, angeordnet. Bei der Beleuchtungs-Lichtquelle handelt es sich vorzugsweise um eine Weitfeld-Lichtquelle, deren Strahlung beispielsweise durch einen in Mikroskopen üblichen Kondensor auf das Objekt gelenkt wird. Die Detektion der vom Objekt ausgehenden, vorzugsweise transmittierten Strahlung findet hierbei auf derselben Seite des Objekts statt, auf der die Anregungs-Lichtquelle angeordnet ist. Hierbei ist vorzugsweise eine zumindest teilweise gemeinsame Optik für die Lenkung der Anregungs-Strahlung auf das Objekt, sowie die Lenkung der transmittierten Beleuchtungs-Strahlung zu der Detektoreinrichtung vorgesehen. Der Detektoreinrichtung kann ein Farbfilter, insbesondere ein Bandpassfilter vorgeschaltet sein.

Vorzugsweise ist die aus dem Messvolumen austretende Strahlung divergent; besonders bevorzugt weist sie eine numerische Apertur auf, die der numerischen Apertur der Detektoroptik im wesentlichen entspricht. Hierdurch wird erreicht, dass die Detektion des transmittierten Lichts über ein Pinhole oder dergleichen eine Gewichtsfunktion aufweist, die die gewünschte zu beobachtende Objektebene bevorzugt.

Gemäß einer bevorzugten Ausführungsform des erfindungsgemäßen Verfahrens, das vorzugsweise mit der vorstehend beschriebenen erfindungsgemäßen Vorrichtung durchgeführt wird, erfolgt in einem ersten Schritt das Messen der durch das Objekt transmittierten Beleuchtungs-Strahlung bei einer ersten Intensität der Anregungs-Strahlung. Mit Hilfe einer zweiten Messung wird die transmittierte Beleuchtuhgs-Strahluhg bei einer zweiten Intensität der Anregungsstrahlung gemessen. Anschließend erfolgt ein Vergleich der beiden Messwerte, insbesondere der Intensitätswerte der durch das entsprechende Messvolumen transmittierten Beleuchtungs-Strahlung. Alternativ ist es möglich, die Intensität der Anregungsstrahlung mit einer Rate zu modulieren, die größer ist als die Abtastrate des Scanvorgangs, und die Amplitude der Schwankungen der durch das Objekt transmittierten Intensität mit dem Detektor zu erfassen.

Eine Anwendungsmöglichkeit der erfindungsgemäßen Vorrichtung ist die Untersuchung von Transmissionseigenschaften von Objekten. Hierzu wird die Probe sowohl mit einer Anregungs-Lichtquelle, die auch als Pump-Lichtquelle bezeichnet wird, als auch mit einer Beleuchtungs-Lichtquelle, die auch als ProbeLichtquelle bezeichnet wird, beleuchtet. Hierbei werden die Moleküle des zu untersuchenden Objekts durch die Anregungs-Lichtquelle angeregt, so dass die Besetzungsdichte des Grundzustands des Moleküls reduziert wird. Dies hat zur Folge, dass das von der Beleuchtungs-Lichtquelle kommende Licht bzw. eine elektromagnetische Strahlung die Moleküle nicht mehr anregt, sondern das Objekt passiert, so dass die Transmission gemessen werden kann. Hierbei werden die beiden Lichtquellen, bei denen es sich um Laser-Lichtquellen handeln kann, mit ähnlichen Wellenlängenbereichen betrieben, wobei es sich um sichtbares oder nicht sichtbares Licht handeln kann. Bei dem aus dem Stand der Technik bekannten Verfahren wird sowohl die Beleuchtungs-Lichtquelle, als auch die Anregungs-Lichtquelle an demselben Ort des Objekts fokussiert, während das erfindungsgemäße Verfahren auf eine räumlich ausgedehnte Beleuchtung eines Objektabschnittes abzielt. Trotzdem ist es erfindungsgemäß möglich, die Transmissionseigenschaften des Objektes präzise ortsaufgelöst, insbesondere konfokal, zu untersuchen. Zu diesem Zweck wird die fokussierte Anregungsstrahlung zur ortsaufgelösten Modulation oder Beeinflussung der Transmissionseigenschaften verwendet. Der Detektor kann konfokal zu den Foki der Anregungsstrahlung angeordnet werden; insbesondere können Anregungsstrahlung und detektierte Strahlung durch die gleichen Pinholesysteme geführt werden, da Anregungslichtquelle und Detektor bezüglich des Objektes auf der gleichen Seite angeordnet werden können. Bei dem aus dem Stand der Technik bekannten Verfahren ist es hingegen zur Erzielung einer konfokalen Detektion notwendig, die Foki der bezüglich des Objektes auf - gegenüberliegenden Seiten angeordneten Beleuchtungslichtquelle und Detektoreinrichtung zu einer präzisen Übereinstimmung zu bringen, welches nur mit hohem Aufwand möglich ist.

Eine weitere erfindungsgemäße Anwendungsmöglichkeit besteht in der Analyse von zweistufigen Absorptionsprozessen. Hierbei können die von der Anregungsstrahlung angeregten Moleküle durch Absorption eines weiteren Photons der Beleuchtungsstrahlung in einen weiteren Anregungszustand versetzt werden. Dieser Vorgang kann über die Absorption der Beleuchtungsstrahlung nachgewiesen werden. Falls die von der Anregungs-Strahlung angeregten Moleküle durch Absorption eines weiteren Photons der Beleuchtungsstrahlung in eine Zustand mit Eigenfluoreszenz angeregt werden, kann dessen Fluoreszenz durch geeignete spektrale Filterung, insbesondere frei von Signalhintergrund der Anregungs-Strahlung gemessen werden. Je nach den beteiligten Energieniveaus der Moleküle kann die Wellenlänge der gemessenen Fluoreszenz größer oder kleiner sein als die der Anregungs- und/oder Beleuchtungs-Strahlung.

Ein spezielles Beispiel zweistufiger Absorptionsprozesse ist die stimulierte Emission. Hierbei werden die durch die Anregungs-Strahlung angeregten Moleküle durch die Beleuchtungsstrahlung zur Emission eines Photons angeregt. Die stimulierte Strahlung hat im allgemeinen dieselben Eigenschaften, beispielsweise hinsichtlich der Wellenlänge, der Richtung und der Polarisation wie das stimulierende Beleuchtungs-Photon. Die Beleuchtungs-Wellenlänge liegt vorzugsweise im Emissionsbereich der angeregten Moleküle. Als Nachweismöglichkeit kann entweder die scheinbar negative Absorption der Beleuchtungs-Strahlung genutzt werden, oder die Verringerung der Fluoreszenz in anderen Bereichen der Emission.

Ferner ist es mit Hilfe der erfindungsgemäßen Vorrichtung möglich, lokale Konzentrationen absorbierender Moleküle, insbesondere Farbstoffmoleküle, zu messen. Die hier vorgeschlagene Messung der Absorption hat gegenüber der bekannten Messung der Fluoreszenzintensität den Vorteil, weitgehend unabhängig von den Emissionseigenschaften der Moleküle zu sein, welche in der Praxis häufig durch die chemische Umgebung der Moleküle beeinflusst oder verfälscht werden.

Bevorzugte Verfahren, die insbesondere mit Hilfe der vorstehend beschriebenen erfindungsgemäßen Vorrichtung durchgeführt werden können, sind ferner das Bestimmen der Transmissionsänderung in Abhängigkeit von den Eigenschaften der Beleuchtungs-Strahlung beispielsweise durch die Aufnahme mehrere Transmissionsbilder bei unterschiedlichen Beleuchtungs-Strahlungs-Intensitäten oder Beleuchtungs-Strahlungs-Wellenlängen. Ebenso ist es möglich, eine Transmissionsänderung hinsichtlich des Einflusses der Beleuchtungs-Strahlung durch die Modulation der Beleuchtungs-Strahlung zu bestimmen. Hierbei kann gegebenenfalls die Schwankung der transmittierten Intensität detektiert werden.

Eine weitere Anwendungsmöglichkeit besteht in dem spektralen Scannen der Anregungs- oder Beleuchtungs-Strahlung. Hierbei wird eine von der Wellenlänge abhängige Absorption aufgezeigt. Diese Abhängigkeit kann genutzt werden, um z.B. Konzentrationsverhältnisse unterschiedlicher Sorten von Absorptionsmolekülen nachzuweisen. So kann die Änderung der spektralen Verteilung des Fluoreszenzlichts, der Intensität des durch einen Zwei-Stufen-Prozess erzeugten Fluoreszenzlichts oder der Intensität der stimulierten Emission abhängig von der Wellenlänge der Beleuchtungsstrahlung gemessen werden.

Ferner ist mit Hilfe der erfindungsgemäßen Vorrichtung eine Bestimmung der Lebenszeit angeregter Zustände der absorbierenden Moleküle möglich. Hierzu wird gepulste und/oder anderweitig modulierte Beleuchtungs- und/oder Anregungs-Strahlung verwendet. Insbesondere ist die Phasenverschiebung zwischen periodisch modellierter Anregungs- und Beleuchtungs-Intensität zu dieser Bestimmung sehr geeignet. In Abhängigkeit der Phasenverschiebung wird die transmittierte Beleuchtungs-Strahlung durch einen Detektor aufgenommen. Hierbei kann ein Detektor mit relativ geringer Zeitauflösung eingesetzt werden.

Unterschiedliche Methoden zur Separation von zu detektierender Strahlung (z. B. transmittierte Beleuchtungsstrahlung) und Anregungsstrahlung sind möglich. Dies kann beispielsweise über eine Wellenlängenkodierung erfolgen, wenn die Anregungs- und die Detektionsstrahlung deutlich unterschiedliche Wellenlängen aufweisen. Die Detektion wird sodann durch einen dichroitischen Strahlteiler realisiert.

Durch das Vorsehen von beispielsweise gepulster oder anderweitig modulierter Beleuchtungs- und/oder Anregungs-Strahlung ist eine zeitliche Separation von durch die Beleuchtungs-Strahlung und/oder die Anregungs-Strahlung hervorgerufenen Effekten möglich. Dies kann insbesondere mit Hilfe von zeitauflösenden Detektoreinrichtungen erfolgen.

Ferner ist eine Separation von transmittierter Beleuchtungs- und Anregungsstrahlung durch Winkelkodierung in der Objektebene möglich. Hier tritt die Anregungs- und Beleuchtungsstrahlung in unterschiedlichen Raumrichtungen aus dem Messvolumen aus. Die Detektionsoptik wird ggf. durch Einsatz geeigneter Blenden derart eingerichtet, dass sie nur die transmittierte Beleuchtungsstrahlung erfasst.

Nachstehend wird die Erfindung anhand bevorzugter Ausführungsformen unter Bezugnahme auf die anliegenden Zeichnungen näher erläutert.

Es zeigen:

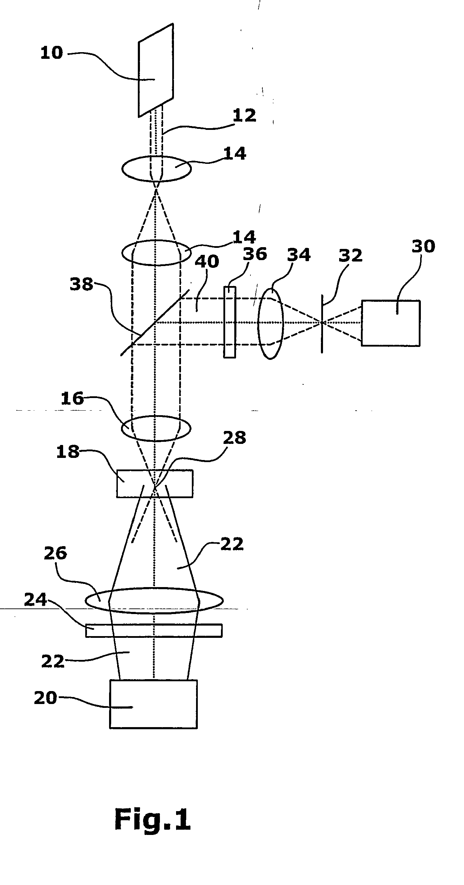

- Fig. 1: eine schematische Ansicht einer ersten bevorzugten Ausführungsform
- der: erfindungsgemäßen Vorrichtung,
- Fig.2: eine schematische perspektivische Ansicht einer zweiten bevorzugten Ausführungsform der erfindungsgemäßen Vorrichtung, wobei hier nur die wesentlichen Bauteile dargestellt sind.

Die Vorrichtung weist eine Anregungs-Lichtquelle 10 auf, deren Anregungsstrahl 12 über eine Optikeinrichtung 14 kollimiert wird. Durch eine weitere Optikeinrichtung 16 erfolgt ein Fokussieren des Anregungsstrahls innerhalb eines Objekts 18, bei dem es sich insbesondere um eine chemische und/oder biologische Probe, die insbesondere Partikel wie Zellen aufweist, handeln kann. Der oder die Foki der Anregungsstrahlung bestimmen den Ort eines oder mehrerer Messvolumina 28 innerhalb des Objekts.

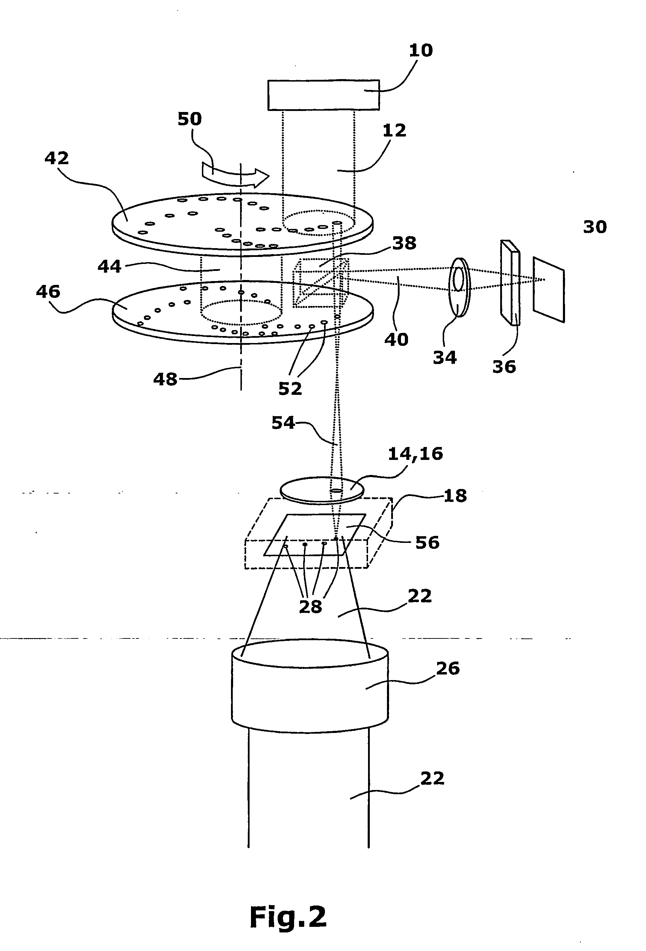

Zur Durchführung der Messung optischer Eigenschaften eines Objektes, insbesondere zur Durchführung von Transmissionsmessungen, ist auf der der Anregungs-Lichtquelle gegenüberliegenden Seite des Objekts 18 eine Beleuchtungs-Lichtquelle 20 vorgesehen. Die von der Beleuchtungs-Lichtquelle 20 ausgehende Beleuchtungs-Strahlung weist in der hier dargestellten Ausführungsform eine andere Wellenlänge auf als das Anregungs-Licht. Der Beleuchtungs-Strahl 22 passiert gegebenenfalls einen Farbfilter 24, sowie eine Optikeinrichtung 26, bei der es sich vorzugsweise um einen Kondensor handelt. Hierdurch wird der Beleuchtungs-Strahl 22 in Richtung des Objekts gelenkt, jedoch nicht auf das oder die einzelnen Messvolumina innerhalb des Objekts 18 fokussiert. Vielmehr leuchtet die Beleuchtungs-Lichtquelle 20 das Objekt innerhalb eines zu beobachtenden Objektausschnitts aus, wobei in dem Objektausschnitt mehrere Messvolumina 28, die unterschiedlichen Foki der Anregungs-Lichtquelle entsprechen, angeordnet sein können (Fig. 2).

Ferner ist auf der Seite der Anregungs-Lichtquelle 10 eine Detektoreinrichtung 30, bei der es sich beispielsweise um ein CCD-Array oder um eine CCD-Kamera handelt, vorgesehen. Der Detektoreinrichtung ist ein Pinhole 32 vorgeschaltet, durch das das Messvolumen 28 konfokal auf die Detektoreinrichtung 30 abgebildet wird. Hierzu ist dem Pinhole 32 eine Optikeinrichtung 34 sowie gegebenenfalls ein Farbfilter 36 vorgeschaltet. Durch den Farbfilter 36, bei dem es sich insbesondere um einen Bandpass handelt, ist sichergestellt, dass die Detektoreinrichtung 30 im Wesentlichen die von dem Objekt 28 transmittierte Strahlung der Beleuchtungs-Lichtquelle 20 erfasst. Vorzugsweise ist ein wellenlängenabhängiger Strahlteiler 38, durch den der Anregungs-Strahlengang 12 und der Detektions-Strahlengang 40 geteilt wird, entsprechend gewählt.

Durch die konfokale optische Anordnung der Anregungs-Lichtquelle 10 und der Detektoreinrichtung 30 ist eine dreidimensionale ortsauflösende Messung der Transmissionsänderung einzelner Messvolumina 28 in dem Objekt 18 möglich, die durch die Anregungs-Lichtquelle 10 bewirkt wird. Die Beleuchtungs-Strahlung 22, deren Transmission durch das Objekt 18 gemessen wird, muss hierbei nicht ortsauflösend oder konfokal ausgebildet sein.

Anstelle eines einzigen Messvolumens 28 innerhalb des Objekts 18 ist es auch möglich, mit Hilfe eines Nipkow-Moduls (Fig.2) mehrere Foki in dem Objekt bzw. der Probe zu erzeugen.

Hierzu weist das Nipkow-Modul ein Pinhole-Array 46 auf. Der kollimierte Anregungsstrahl 12 leuchtet eine Vielzahl von Pinholes 52, vorzugsweise mehrere hundert bis tausend, gleichzeitig aus. Zur Erhöhung der Anregungseffizienz ist im dargestellten Beispiel dem Pinhole-Array 46 ein Mikrolinsen-Array 42 vorgeordnet, dessen Linsen die Anregungsstrahlung auf die korrespondierenden Pinholes fokussieren. Zwischen den beiden Scheiben 42, 46 ist der wellenlängenselektive Strahlteiler 38 angeordnet.

Über ein Verbindungselement 44 ist das Mikrolinsen-Array mit einem Pinhole-Array 46 verbunden. Beide korrespondierenden Arrays sind um eine gemeinsame Längsachse 48 in Richtung eines Pfeiles 50 drehbar. Durch die Drehung bewegen sich die einzelnen Pinholes 52 auf Kreisbahnen durch das Bildfeld. Die Vielzahl der Pinholes 52 rastert damit das Objekt 18 entlang einer Schar von parallelen Kreissegmenten ab.

Figur 2 zeigt exemplarisch den weiteren Verlauf des von einem einzelnen Pinhole ausgehenden Strahlengangs 54. Tatsächlich wird die Vielzahl der durch die einzelnen Pinholes 52 hindurchtretenden parallel verlaufenden Strahlengänge 54 durch eine Optik 16 in das Objekt 18 fokussiert, wodurch eine Vielzahl von Messvolumina 28 innerhalb des Objekts 18 erzeugt wird. Die Messvolumina 28 liegen innerhalb einer Objektebene 56 des Objekts 18. Die Objektebene 56 wird innerhalb eines Objektausschnitts durch einen Beleuchtungs-Strahl 22 beleuchtet.

Der durch den Strahlteiler 38 umgelenkte Detektionsstrahl 40 wird über eine Linse 34 und einen Filter 36 auf die Detektoreinrichtung 30 gelenkt. Abweichend von einer üblichen Verwendung des Nipkow-Moduls in einem Fluoreszenzmikroskop ist der Filter 36 hierbei derart gewählt, dass nicht die durch das Anregungslicht 12 angeregte Fluoreszenz, sondern das durch das Objekt 18 transmittierte Beleuchtungslicht 22 detektiert wird. Somit ist es mit einem im Wesentlichen unmodifizierten Nipkow-Fluoreszenzmikroskop aufgrund der Parallelisierung einer Vielzahl von Messvolumina 28 möglich, eine schnelle konfokale Absorptionsmessung durchzuführen.

Im folgenden wird eine beispielhalfte Ausführungsform der erfindungsgemäßen Vorrichtung dargestellt, die im wesentlichen der in Figur 2 gezeigten Anordnung entspricht.

Als optomechanische Basis dient ein inverses Mikroskopstativ Olympus IX70. An einem seitlichen Port dieses Stativs ist ein Nipkow-Modul Yokogawa CSU-100 angeordnet, das zur konfokalen Anregung und Detektion dient. Als Anregungs-Lichtquelle dient ein Festkörperlaser Coherent Sapphire 488-20, der eine Anregungsstrahlung der Wellenlänge 488 nm emittiert. Verstellbare Graufilter und Blenden ermöglichen eine Variation der Intensität des Anregungslichtes. Diese Strahlung wird über eine optische Faser in das Nipkow-Modul eingekoppelt. Innerhalb des Moduls wird die Anregungsstrahlung kollimiert und durch im Verbund rotierende Mikrolinsen- und Pinhole-Scheiben geführt. Das Pinhole-Array wird über die im Mikroskopstativ IX-70 standardmäßig vorhandene Tubuslinse sowie ein Objektiv Olympus UPIApo 20x (numerische Apertur 0,7; Wasserimmersion) in die Probe abgebildet. Die untersuchten Proben sind im vorliegenden Fall insbesondere mit Fluoreszenzfarbstoffen markierte Zellen, die auf den Boden einer Mikrotiterplatte sedimentiert sind. Die handelsübliche Mikrotiterplatte umfaßt ein Raster von 96 oder 384 Probengefäßen. Der Boden der Mikrotiterplatte ist als optisch transparente Folie mit guten Transmissionseigenschaften und guter Planarität ausgeführt; geeignet sind beispielsweise Greiner µclear Mikrotiterplatten. Oberhalb der Zellen befindet sich eine Pufferflüssigkeit. Der Probenträger ist nach oben hin offen.

Von der Probe ausgehendes Licht wird durch dasselbe Objektiv wiederum auf die Pinhole-Scheibe abgebildet. Durch einen innerhalb des Nipkow-Moduls zwischen Pinhole- und Mikrolinsenscheibe angeordneten dichroitischen Strahlteiler wird dieses Licht in Richtung eines CCD-Detektors ausgespiegelt. Dieser Strahlteiler transmittiert den Wellenlängenbereich von 480 - 495 nm, der das Anregungslicht umfasst. Er reflektiert insbesondere den Wellenlängenbereich 495 - 600 nm, der zur Analyse der von der Probe ausgehenden Strahlung genutzt werden soll. Als CCD-Detektor kommt eine CCD-Kamera vom Typ PCO Sensicam QE zum Einsatz, die aufgrund der Peltierkühlung des CCD-Sensors ein besonders hohes Signal/Rauschverhältnis liefert. Zwischen dem dichroitischen Strahlteiler und dem CCD-Detektor ist ein Linsensystem aus Kollimations- und Abbildungslinse angeordnet, das eine Abbildung der Pinhole-Scheibe auf den CCD-Detektor bewirkt. Zur Selektion des detektierten Wellenlängenbereiches sind vor dem CCD-Detektor wechselbare Bandpaßfilter vorgesehen, die als dielektrische Mehrschicht-Systeme ausgeführt sind.

Während das zur Anregung und Detektion verwendete Objektiv unterhalb der Probe angeordnet ist, ist oberhalb der Probe eine Beleuchtungs-Einrichtung vorgesehen. Diese besteht aus einer Beleuchtungs-Lichtquelle TILL Photonics Polychrome IV, die über ein integriertes Gitterspektrometer spektral durchstimmbar ist. Das emittierte, spektral gefilterte Licht wird über eine Multimode-Lichtleiterfaser und einen im Lieferumfang enthaltenen Kondensor der Probe zugeführt. Durch den Kondensor wird das Beleuchtungslicht nur annähernd auf den Durchmesser eines einzelnen Probengefäßes gebündelt. Der schwach konvergente Lichtkegel kann ohne wesentliche Störung durch den gekrümmten Meniskus der freiliegenden Flüssigkeitsoberfläche in Richtung der sedimetierten Zellen geführt werden.

Zur Fluoreszenzmarkierung der Zellen in der Probe wird ein Farbstoff eingesetzt, der etwa im Wellenlängenbereich von 480 - 510 nm absorbiert und im Bereich von etwa 520 - 590 nm Fluoreszenzlicht emittieren kann. Die Beleuchtungslichtquelle wird bei der Wellenlänge 500 nm betrieben. Für die Durchführung von Transmissionsmessungen wird die Probe bei unterschiedlichen Intensitäten des Anregungslichtes im Wellenlängenbereich des Beleuchtungslichtes mit dem CCD-Detektor fotografiert.

Bei geringer Intensität des Anregungslichtes sind nur wenige Farbstoffmoleküle in der Probe im angeregten Zustand, die meisten befinden sich im Grundzustand. Die zahlreichen nicht angeregten Farbstoffmoleküle sind in der Lage, das Beleuchtungslicht zu absorbieren. Ein Bild des transmittierten Beleuchtungslichtes weist an den Stellen, an denen viele Farbstoffmoleküle in der Probe vorhanden sind, eine geringe Intensität auf.

Bei Erhöhen der Anregungsleistung befindet sich ein größerer Anteil der Farbstoffmoleküle in der Probe im angeregten Zustand, ist also nicht mehr in der Lage, das Beleuchtungslicht zu absorbieren. Hinsichtlich des transmittierten Lichts ist der Unterschied zwischen Probenbereichen hoher und niedriger Farbstoffkonzentration geringer, die Helligkeitsunterschiede auf den Bildern des CCD-Detektors sind klein. Aufgrund der hochgradigen Parallelisierung, die mit dem erfindungsgemäßen Ansatz ermöglicht wird, lassen sich sehr kurze Belichtungszeiten unter 1 sec für die vollständige konfokale Rasterung des Bildausschnittes realisieren.

Aus dem Vergleich der ortsabhängigen Bildhelligkeit bei unterschiedlichen Leistungen des Anregungslichtes kann auf die lokale Konzentration der Farbstoffmoleküle geschlossen werden.

Zusätzlich können Bilder im Wellenlängenbereich der angeregten Fluoreszenz der Farbstoffmoleküle erstellt werden. Hierzu kann ggf. die Beleuchtungslichtquelle ausgeschaltet werden und vor dem Detektor ein Bandpassfilter für den Wellenlängenbereich 520 - 590 nm angeordnet sein.

Die ortsabhängig bestimmte Fluoreszenzintensität aus der Probe kann mit den ortsabhängig gemessenen Transmissionseigenschaften verglichen werden. Da die Emissionseffizienz der- Farbstoffmoleküle oftmals stark von den chemischen Eigenschaften, etwa dem pH-Wert, der umgebenden Probenflüssigkeit abhängt, liefert dieser Vergleich Informationen über lokale chemische Eigenschaften der Zellen in der Probe.

## Patentansprüche

1. Vorrichtung zur Messung optischer Eigenschaften eines Objektes, insbesondere zur Bestimmung seiner optischen Transmissions- oder Absorptionseigenschaften, mit
einer das Objekt (18) beleuchtenden Beleuchtungs-Lichtquelle (20), die eine Beleuchtungs-Strahlung (22) abgibt, und einen räumlich ausgedehnten Objektausschnitt beleuchtet,
einer das Objekt (18) beleuchtenden Anregungs-Lichtquelle (10), die eine Anregungsstrahlung (12) abgibt, welche geeignet ist, die optischen Eigenschaften des Objekts (18) zu verändern, wobei die Anregungsstrahlung (12) der Anregungs-Lichtquelle (10) in mehrere Mesvolumina (28) fokussiert ist, die in dem Objektausschnitt angeordnet sind,
Mitteln (34) zur Abbildung der Messvolumina (28), die im wesentlichen in einer innerhalb des Objektes (18) gelegenen Objektebene (56) liegen, auf eine Detektoreinrichtung (30), wobei die Detektoreinrichtung (30) eine spektrale Empfindlichkeit zur Erfassung der durch das Objekt (18) hindurch tretenden Beleuchtungs-Strahlung (22, 40) aufweist und konfokal zu den Messvolumina (28) angeordnet ist.

2. Vorrichtung nach Anspruch 1, **dadurch gekennzeichnet, dass** die spektrale Empfindlichkeit selektierbar ist.

3. Vorrichtung nach Anspruch 1 oder 2, **dadurch gekennzeichnet, dass** die Beleuchtungs-Lichtquelle (20) und die Anregungs-Lichtquelle (10) auf das Objekt (18) bezogen auf gegenüberliegenden Seiten angeordnet sind.

4. Vorrichtung nach einem der Ansprüche 1 bis 3, **dadurch gekennzeichnet, dass** die Detektoreinrichtung (30) bezüglich des Objekts (18) auf derselben Seite wie die Anregungs-Lichtquelle (10) angeordnet ist.

5. Vorrichtung nach einem der Ansprüche 1 bis 4, **dadurch gekennzeichnet, dass** zur Erzeugung einer Vielzahl von Messvolumina (28) durch die Anregungs-Lichtquelle (10) ein Pinhole-Array (46) vorgesehen ist.

6. Vorrichtung nach einem der Ansprüche 1 bis 5, **dadurch gekennzeichnet, dass** die Messvolumina (28) im wesentlichen punktförmig ausgebildet sind.

7. Vorrichtung nach einem der Ansprüche 1 bis 5, **dadurch gekennzeichnet, dass** die Messvolumina (28) im wesentlichen linienförmig ausgebildet sind.

8. Vorrichtung nach einem der Ansprüche 5 bis 7, **dadurch gekennzeichnet, dass** zur Erzeugung der Vielzahl von Messvolumina (28) als Pinhole-Array (46) eine Nipkow-Scheibe vorgesehen ist.

9. Vorrichtung nach einem der Ansprüche 1 bis 8, **dadurch gekennzeichnet, dass** die Anregungs-Lichtquelle (10) und/oder die Beleuchtungs-Lichtquelle (20) spektral durchstimmbar und/oder selektierbar ist.

10. Vorrichtung nach einem der Ansprüche 1 bis 9, **dadurch gekennzeichnet, dass** die Anregungs-Lichtquelle (10) und/oder die Beleuchtungs-Lichtquelle (20) in ihrer Strahlungsintensität variierbar sind.

11. Vorrichtung nach einem der Ansprüche 1 bis 10, **gekennzeichnet durch** eine zwischen dem Objekt (18) und der Beleuchtungs-Lichtquelle (20) angeordnete Optik (26), die derart ausgebildet ist, dass die Beleuchtungs-Strahlung (22) mit einer numerischen Apertur von mindestens 0,1 aus dem Objekt (18) in Richtung der Detektoreinrichtung (30) austritt.

12. Vorrichtung nach einem der Ansprüche 1 bis 11, **dadurch gekennzeichnet, dass** die Detektoreinrichtung (30) mehrere Detektoren umfasst, die sich hinsichtlich ihrer spektralen Empfindlichkeit unterscheiden.

13. Vorrichtung nach einem der Ansprüche 1 bis 12, **dadurch gekennzeichnet, dass** die Beleuchtungs-Lichtquelle (20) und/oder die Anregungs-Lichtquelle (10) zur Abgabe in ihrer Intensität modulierter, insbesondere gepulster, Strahlung ausgebildet sind.

14. Verfahren zur Messung optischer Eigenschaften eines Objektes, insbesondere zur Bestimmung seiner optischen Transmissions- oder Absorptionseigenschaften, mit den Schritten:
Beleuchten des Objektes (18) mit einer Beleuchtungs-Lichtquelle (20),
Beleuchten des Objektes (18) mit einer Anregungs-Lichtquelle (10), die eine Anregungsstrahlung (12) abgibt, welche geeignet ist, die optischen Eigenschaften des Objektes (18) zu verändern,
Erfassen der von dem Objekt (18) ausgehenden Strahlung (40) mit einer Detektoreinrichtung (30),
Abbilden mehrerer Messvolumina (28), die im wesentlichen in einer innerhalb des Objektes (18) gelegenen Objektebene (56) liegen, auf die Detektoreinrichtung (30), die eine spektrale Empfindlichkeit zur Erfassung der durch das Objekt (18) hindurch tretenden Beleuchtungs-Strahlung (22, 40) aufweist und konfokal zu den Messvolumina (28) angeordnet ist,
wobei die Beleuchtungs-Lichtquelle (20) einen räumlichen ausgedehnten Objektausschnitt, in dem die Messvolumina (28) angeordnet sind, beleuchtet und
die Anregungsstrahlung (12) der Anregungs-Lichtquelle (10) in die Messvolumina (28) fokussiert ist.

15. Verfahren nach Anspruch 14, **dadurch gekennzeichnet, dass** die vom Objekt (18) ausgehende Strahlung (40) zunächst bei Beleuchtung des Objekts (18) mit einer ersten Intensität der Anregungsstrahlung (12) und anschließend bei Beleuchtung mit mindestens einer zweiten Intensität der Anregungsstrahlung (12) erfasst wird.

16. Verfahren nach Anspruch 14 oder 15, bei welchem das Objekt (18) mit in ihrer Intensität modulierter, insbesondere gepulster, Anregungsstrahlung (12) beleuchtet wird und vorzugsweise die zeitliche Schwankung der Intensität der von der Detektoreinrichtung (30) erfassten Strahlung (40) erfasst wird.

17. Verfahren nach einem der Ansprüche 14 bis 16, bei welchem die Empfindlichkeit der Detektoreinrichtung (30) moduliert wird.

18. Verfahren nach einem der Ansprüche 16 oder 17, bei welchem das Objekt (18) mit in ihrer Intensität modulierter Beleuchtungs-Strahlung (22) beleuchtet wird und vorzugsweise die Intensität der von der Detektoreinrichtung (30) erfassten Strahlung (40) in Abhängigkeit von der Phasendifferenz zwischen den Intensitätsmodulationen der Anregungs- und Beleuchtungs-Strahlung (12, 22) erfasst wird.

## Claims

1. A device for measuring optical properties of an object, particularly for determining the optical transmission or absorption properties of the object, comprising
an illumination light source (20) illuminating the object (18), said illumination light source emitting illumination radiation (22) and illuminating a spatially dimensioned object portion,
an excitation light source (10) illuminating the object (18), said excitation light source emitting excitation radiation (12) being suited to change the optical properties of the object (18), said excitation radiation (12) of said excitation light source (10) being focused in measurement volumes (28) located in the object portion,
means (34) for imaging a plurality of measurement volumes (28) substantially lying in an object plane (56) located within the object (18), onto the detector device (30), said detector device (30) having a spectral sensitivity for detection of the illumination radiation (22,40) passing through the object (18) and being arranged confocally to the measurement volumes (28).

2. The device according to claim 1, wherein the spectral sensitivity is selectable.

3. The device according to claim 1 or 2, wherein said illumination light source (20) and the excitation light source (10) are arranged on opposite sides relative to the object (18).

4. The device according to one of claims 1 to 3, wherein said detector device (30) is arranged on the same side as the excitation light source (10) relative to the object (18).

5. The device according to one of claims 1 to 4, wherein a pinhole array (46) is provided for the excitation light source (10) to generate a plurality of measurement volumes (28).

6. The device according to one of claims 1 to 5, wherein said measurement volumes (28) are substantially dot-shaped.

7. The device according to one of claims 1 to 5, wherein said measurement volumes (28) are substantially line-shaped.

8. The device according to one of claims 5 to 7, wherein a Nipkow disc is provided as the pinhole array (46) to generate a plurality of measurement volumes (28).

9. The device according to one of claims 1 to 8, wherein said excitation light source (10) and/or the Illumination light source (20) are spectrally variable and/or selectable.

10. The device according to one of claims 1 to 9, wherein said excitation light source (10) and/or the illumination light source (20) are variable in their radiation intensity,

11. The device according to one of claims 1 to 10, wherein an optics device (26) is arranged between the object (18) and the illumination light source (20), and is configured to cause the illumination radiation (22) to exit through a numerical aperture of at least 0.1 from the object (18) in the direction of the detector device (30).

12. The device according to one of claims 1 to 11, wherein said detector device (30) comprises a plurality of detectors differing from each other with respect to their spectral sensitivity.

13. The device according to one of claims 1 to 12, wherein said illumination light source (20) and/or the excitation light source (10) are configured to emit intensity-modulated and particularly pulsed radiation.

14. A method for measuring optical properties of an object, particularly for determining the optical transmission or absorption properties of the object, comprising the steps of:
illuminating the object (18) by an illumination light source (20),
illuminating the object (18) by an excitation light source (10) emitting excitation radiation (12) suited to change the optical properties of the object (18),
detecting the radiation (40) issuing from the object (18) by use of a detector device (30),
imaging a plurality of measurement volumes (28) substantially lying in an object plane (56) located within the object (18), onto the detector device (30) which has a spectral sensitivity for detecting the illumination radiation (22, 40) passing through the object (18) and which is arranged confocally to the measuring volumes (28),
said illumination light source (20) illuminating a spatially dimensioned object portion in which the measurement volumes (28) are arranged, and
the excitation radiation (12) of the excitation light source (10) being focused into the measurement volumes (28).

15. The method according to claim 14, wherein said radiation (40) issuing from the object (18) is detected first while the object (18) is illuminated with a first intensity of the excitation radiation (12) and then while the object is illuminated with at least a second intensity of the excitation radiation (12).

16. The method according to claim 14 or 15, wherein the object (18) is illuminated by intensity-modulated and particularly pulsed excitation radiation (12) and detection is performed preferably of the temporal variation of the intensity of the radiation (40) detected by the detector device (30).

17. The method according to one of claims 14 to 16, wherein the sensitivity of the detector device (30) is modulated.

18. The method according to claim 16 or 17, wherein the object (18) is illuminated by intensity-modulated illumination radiation (22) and detection is performed on the intensity of the radiation (40) detected by the detector device (30) in dependence on the phase difference between the intensity modulations of the excitation and illumination radiation (12, 22).

## Revendications

1. Dispositif de mesure des propriétés optiques d'un objet, en particulier pour la détermination de ses propriétés optiques de transmission ou d'absorption, comprenant
une source de lumière d'illumination (20) illuminant l'objet (18), ladite source émettant un rayonnement d'illumination (22) et illuminant une section extensive de l'objet,
une source de lumière d'excitation (10) illuminant ledit objet (18), émettant un rayonnement d'excitation (12) propre à changer les propriétés optiques dudit objet (18), ledit rayonnement d'excitation (12) de la source de lumière d'excitation (10) est focalisé dans des volumes de mesure (28) situées dans la section de l'objet,
des moyens (34) pour reproduire sur un moyen détecteur (30) les volumes de mesure (28) qui sont situées sensiblement sur un plan d'objet (56) situé au sein d'un objet (18), le moyen détecteur (30) ayant une sensitivité spectrale pour détecter ledit rayonnement d'illumination (22, 40) qui traverse ledit objet (18), et étant arrangé de manière confocale auxdites volumes de mesure (28).

2. Dispositif selon la revendication 1, **caractérisé en ce que** ladite sensitivité spectrale est propre à être sélectée

3. Dispositif selon la revendication 1 ou 2, **caractérisé en ce que** ladite source de lumière d'illumination (20) et ladite source de lumière d'excitation (10) sont positionnées sur des côtés opposés par rapport à l'objet (18).

4. Dispositif selon l'une quelconque des revendications 1 à 3, **caractérisé en ce que** le moyen détecteur (30) est positionné sur le même côté, par rapport à l'objet (18), que ladite source de lumière d'excitation (10).

5. Dispositif selon l'une quelconque des revendications 1 à 4, **caractérisé en ce qu'**un arrangement sténopéique (46) est prévu pour la génération d'une multitude de volumes de mesure (28) par ladite source de lumière d'excitation (10).

6. Dispositif selon l'une quelconque des revendications 1 à 5, **caractérisé en ce que** les volumes de mesure (28) sont sensiblement réalisées en forme de point.

7. Dispositif selon l'une quelconque des revendications 1 à 5, **caractérisé en ce que** les volumes de mesure (28) son sensiblement linéaires.

8. Dispositif selon l'une quelconque des revendications 5 à 7, **caractérisé en ce qu'**un disque de Nipkow est prévu comme arrangement sténopéique (46) pour générer ladite multitude de volumes de mesure (28).

9. Dispositif selon l'une quelconque des revendications 1 à 8, **caractérisé en ce que** ladite source de lumière d'excitation (10) et/ou ladite source de lumière d'illumination (20) sont spectralement syntonisables et/ou sélectionnables.

10. Dispositif selon l'une quelconque des revendications 1 à 9, **caractérisé en ce que** l'intensité de rayonnement de ladite source de lumière d'excitation (10) et/ou de ladite source de lumière d'illumination (20) est variable.

11. Dispositif selon l'une quelconque des revendications 1 à 10, **caractérisé par** un système optique (26) situé entre ledit objet (18) et ladite source de lumière d'illumination (20), ledit système optique étant configuré de manière que le rayonnement d'illumination (22) sort dudit objet (18) vers le moyen détecteur (30) avec une aperture numérique d'au moins 0,1.

12. Dispositif selon l'une quelconque des revendications 1 à 11, **caractérisé en ce que** ledit moyen détecteur (30) comprend plusieurs détecteurs qui diffèrent selon leur sensitivité spectrale.

13. Dispositif selon l'une quelconque des revendications 1 à 12, **caractérisé en ce que** ladite source de lumière d'illumination (20) et/ou ladite source de lumière d'excitation (10) sont configurées pour émettre un rayonnement à intensité modulée, notamment pulsée.

14. Procédé de mesure des propriétés optiques d'un objet, en particulier pour la détermination de ses propriétés optiques de transmission ou d'absorption, comprenant les étapes suivantes:
illuminer l'objet (18) à l'aide d'une source de lumière d'illumination (20),
illuminer l'objet (18) à l'aide d'une source de lumière d'excitation (10) émettant un rayonnement d'excitation (12) propre à changer les propriétés optiques dudit objet (18),
détecter le rayonnement (40) venant dudit objet (18) à l'aide d'un moyen détecteur (30),
reproduire plusieurs volumes de mesure (28) situées sensiblement dans un plan d'objet (56) situé au sein dudit objet (18), sur le moyen détecteur (30) ayant une sensitivité spectrale pour détecter le rayonnement d'illumination (22, 40) traversant ledit objet, le moyen détecteur étant arrangé de manière confocale par rapport aux volumes de mesure (28),
ladite source de lumière d'illumination (20) illuminant une section extensive dudit objet dans laquelle se trouvent les volumes de mesure (28), et ledit rayonnement (12) de ladite source de lumière d'excitation (10) étant focalisé dans les volumes de mesure (28).

15. Procédé selon la revendication 14, **caractérisé en ce que** le rayonnement (40) venant dudit objet (18) étant détecté d'abord par l'illumination dudit objet (18) avec une première intensité du rayonnement d'excitation (12) et, ensuite, par l'illumination avec au moins une deuxième intensité dudit rayonnement d'excitation (12).

16. Procédé selon la revendication 14 ou 15, dans lequel ledit objet (18) est illuminé avec un rayonnement d'excitation (12) à intensité modulée, notamment pulsée, et dans lequel, de préférence, on détecte la variation en temps de l'intensité du rayonnement (40) détecté par ledit moyen détecteur (30).

17. Procédé selon l'une quelconque des revendications 14 à 16, dans lequel la sensitivité dudit moyen détecteur (30) est modulé.

18. Procédé selon les revendications 16 ou 17, dans lequel ledit objet (18) est illuminé avec un rayonnement d'illumination (22) à intensité modulée, et dans lequel, de préférence, on détecte l'intensité du rayonnement (40), détecté par ledit moyen détecteur (30), en fonction de la différence des phases entre les modulations d'intensité du rayonnement d'excitation et d'illumination (12, 22).
